# EUROPEAN PATENT SPECIFICATION

(11) **EP 2 767 157 B1**
(45) Date of publication and mention of the grant of the patent: **21.12.2016**
(21) Application number: 14155435.2
(22) Date of filing: 17.02.2014
(51) Int. Cl.: A01K 5/00

(54) **Apparatus for shredding and mixing fibrous products**
Vorrichtung zum Zerreißen und Mischen von Faserprodukten
Appareil permettant de broyer et de mélanger des produits fibreux

(30) Priority: 19.02.2013 IT MI20130230
(43) Date of publication of application: 20.08.2014
(73) Proprietor: OFFICINE SGARIBOLDI S.n.c. di Sgariboldi Giuseppe & C., 26845 CODOGNO, (LO) (IT)
(72) Inventor: Sgariboldi, Giuseppe, 26823 Camairago (LO) (IT)
(74) Representative: Ottazzo, Marco Francesco Agostino

(56) References cited:
- EP-A1- 1 224 859
- EP-A2- 1 449 426
- GB-A- 2 329 098
- US-A- 4 799 800

## Description

The present invention refers to an apparatus for shredding and mixing fibrous products, in particular an apparatus for shredding and mixing fibrous products intended for preparing animal food products.

The apparatus for cutting and subsequently mixing of the fibrous products intended for feeding animals, as well as the apparatus for mixing peats and similar compounds, have been known over the years. Such apparatus perform the mixing of the products introduced thereinto, possibly performing a prior shredding thereof into the apparatus.

Generally, the mixing and cutting apparatus of the known type consist of a tank or casing within which there are mounted devices capable of shredding and mixing the fibrous products (hay, straw, etc.) which are introduced into the tank itself. Such shredding and mixing devices may be arranged in the tank both horizontally and vertically while the mixed product may be discharged through a lateral door of the tank itself.

A mixing and cutting apparatus of the known type is described, for example, in the European patent EP 1449426 B1 in the name of the same applicant. In the shredding and mixing device a similar apparatus consist of a rotor or auger comprising a rotary shaft on which there is mounted a plurality of mixing elements, obtained in form of anchors or blades.

The mixing elements are coil wound so as to constitute a single pitch, or two pitches opposite and converging towards the central area of the rotary shaft. The coils may be both continuous and discontinuous i.e. interrupted, depending on the needs. In addition, the mixing elements bear a series of fixed blades, radially welded on the central shaft and specially inclined and spaced apart from each other. The blades have an appropriate and opposite angle and they are each provided with a front plate, usually in form of a blade or knife, and a rear plate, for example covered with a canvas-reinforced rubber. During the rotation of the shaft the blades perform the mixing of the material and, in the discharge step, they convey towards the approximately median/central area of the tank, at the discharge door, all the mixed material for a complete evacuation thereof.

On the conventional mixing and cutting apparatus the mixing elements have had for a long time the characteristic T-shape or anchor shape. However, such shape has revealed difficulties in obtaining mixtures with large amounts of forage with long fibre (from 7 to 15 cm), which represent more than 50% of the volume of the containment vat in apparatus models with medium-small cubic capacity (from 9 to 15 cubic metres). During the rotation of the shaft in the mixing process there was indeed absorbed so much power by the actuation motor and by the relative hydrostatic transmission such as to cause the stopping, with the ensuing stress of all mechanical components of the rotors and of the reduction gear.

In order to overcome this situation the shape of the mixing elements was modified, passing from the original T-shape to a substantially L-shape. This new shape of the mixing elements, generally mounted on the rotors of the apparatus with medium-small cubing capacity (from 9 to 15 cubic metres), allowed successfully to overcome the aforementioned drawbacks, also efficiently mixing large amounts of forage with long fibre (from 5 to 15 cm), depending on the volume.

However, in the mixing and cutting apparatus of the known type, even in the presence of L-shaped mixing elements, there may occur sporadic stagnation and/or sticking of the fibrous products within the tank, especially at the entry side of the products between the walls of the tank and the auger. In the tank there could also be introduced foreign bodies, or masses of particularly hard fibrous products, such to represent an obstacle for the normal operation of the auger.

All these phenomena may cause unwanted overloads on the rotary shaft of the auger, with ensuing possible turning off of the actuation motor and possible damage to the transmission members. In these cases the auger may once again be rotated by connecting, for example, the relative shaft with a different power takeoff which is much more powerful than the one usually used, so as to overcome the high resistance deriving from the stuck product or from the possible foreign body. However, besides requiring the availability of a more powerful power takeoff, this operation also represents an evident discomfort and a loss of time, hence leading to a further risk of breaking transmission members.

In the best case, the actuation motor could be capable of autonomously overcoming in the resistance deriving from the stuck product or from the possible foreign body. However, in such case there is required a considerable increase of the used power, with ensuing increase of energy and/or the fuel required to obtain the operation of the motor. With the aim of eliminating the sticking there could also be inverted the rotation direction of the motor, but such motor must obviously be predisposed for operating according to a similar mode.

Document GB 2329098 A describes an apparatus for shredding and mixing fibrous products in which the mixing elements, obtained in form of blades, are rotatable with respect to the corresponding supporting rods. The supporting rods are made integral with a central rotary shaft and the distinctive feature of such an apparatus lies in the fact that all these supporting rods are substantially perpendicular to the axis of the central rotary shaft.

In the apparatus of GB 2329098 A the perpendicularity of all supporting rods with respect to the axis of the central rotary shaft does not allow to arrange the blades in proximity of the inner walls of the vat, otherwise the rotation of such blades would not be allowed with respect to the corresponding supporting rods. Indeed, during the rotation of each blade with respect to the corresponding supporting rod only the proximal end of such blade, i.e. the end operatively connected to the supporting rod remains equally spaced apart from the inner walls of the vat. On the other hand, the distal end of each blade describes, within the vat, circumferences of variable diameter as a function of the width of the respective rotation angle, also variable according to the operating conditions of the apparatus.

In practice, in the apparatus of GB 2329098 A an excessive closeness of the distal end of the blades to the inner walls of the vat could generate interference and contrast phenomena during the rotation of the blades, thus scraping such walls and jeopardising the wholeness and the operation of the apparatus itself. Vice versa, an excessive distance of the distal end of the blades from the inner walls of the vat would not allow an efficient action of cleaning the vat during the operations of emptying the fibrous product.

Thus, an object of the present invention is to provide an apparatus for shredding and mixing fibrous products, in particular an apparatus for shredding and mixing fibrous products intended for preparing animal food products, that is capable of overcoming the aforementioned drawbacks of the prior art in an extremely simple, inexpensive and particularly functional manner.

In detail, an object of the present invention is to provide an apparatus for shredding and mixing fibrous products that is capable of operating efficiently also in the presence of stagnation and/or sticking of such fibrous products, or possible foreign bodies, without causing stresses or damages to the actuation motor and relative transmission members.

Another object of the present invention is to provide an apparatus for shredding and mixing fibrous products that is capable of reducing the wear of the relative rotary shaft and the components connected thereto, such as for example the blades or scraper blades.

A further object of the present invention is to provide an apparatus for shredding and mixing fibrous products capable of providing the saving of energy and fuel with respect to analogous devices of the known type.

These objects according to the present invention are obtained by providing an apparatus for shredding and mixing fibrous products as outlined in claim 1.

Further characteristics of the invention are outlined by the dependent claims, which are an integral part of the present description.

The characteristics and advantages of an apparatus for shredding and mixing fibrous products according to the present invention shall be more apparent from the following exemplifying and non-limiting description with reference to the attached schematic drawings wherein:

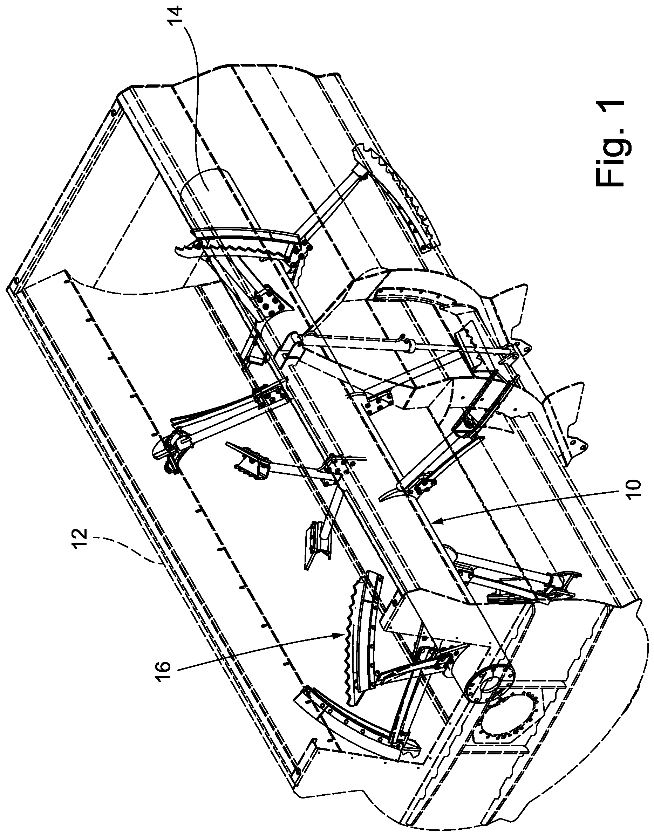

figure 1 is a perspective and transparent view of an apparatus for shredding and mixing fibrous products according to the present invention;

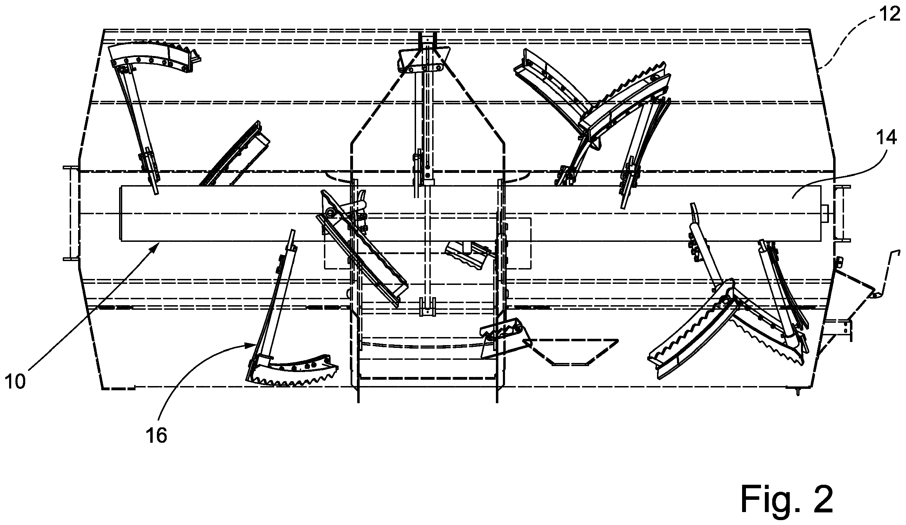

figure 2 is a side elevation and transparent view of the apparatus of figure 1;

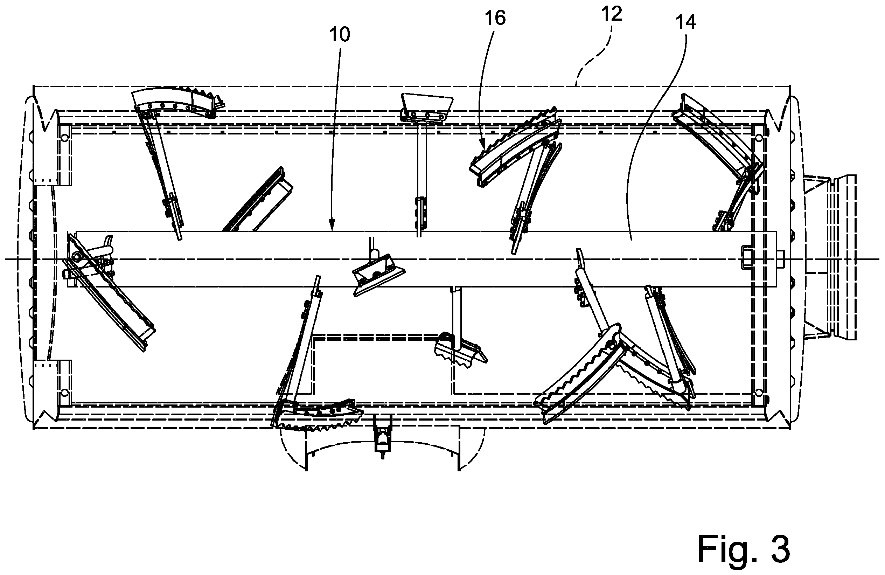

figure 3 is a top and transparent view of the apparatus of figure 1;
figure 4 is a perspective view, from the rear side, of a single mixing element of the apparatus according to the present invention;
figure 5 is a side elevation view of the mixing element of figure 4;
figure 6 is a sectional view, obtained along line VI-VI of figure 5, of the mixing element of figure 4;
figure 7 is a sectional view, obtained along line VII-VII of figure 5, of the mixing element of figure 4;

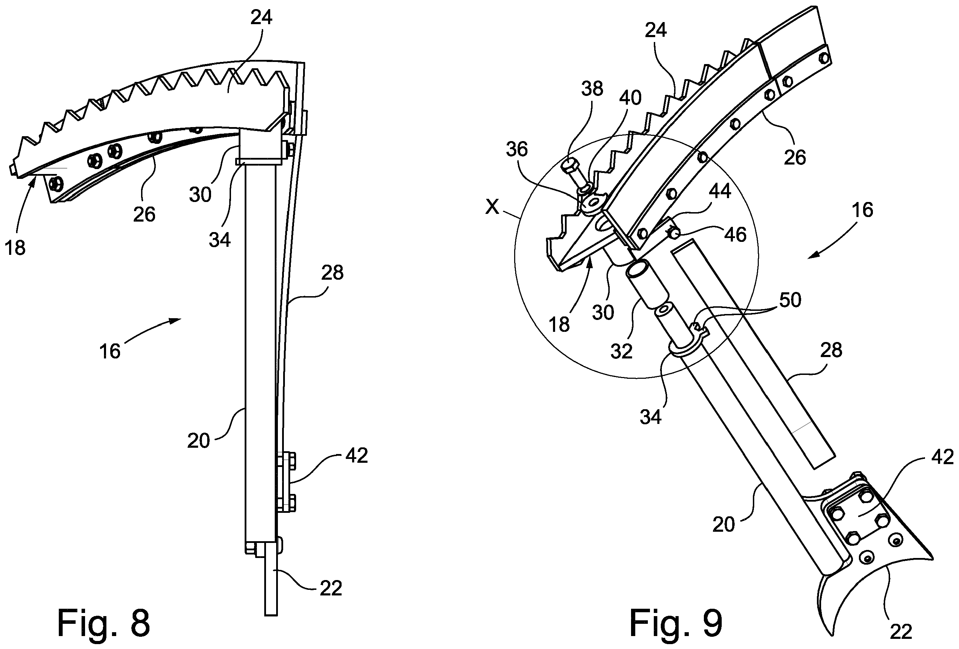

figure 8 is a perspective view, from the front side, of the mixing element of figure 4;
figure 9 is an exploded view of the mixing element of figure 4;
figure 10 is a detailed view of the detail indicated with X in figure 9;
figure 11 is a top view of the mixing element of figure 4, shown in two different operating conditions;
figures 12 and 13 show, in a first embodiment thereof, two distinct mixing elements of the apparatus according to the invention, with the relative inclination angles with respect to two planes perpendicular to each other and respectively parallel and perpendicular to the axis of the rotary shaft; and
figures 14 and 15 show, in a second embodiment thereof, two distinct mixing elements of the apparatus according to the invention, with the relative inclination angles with respect to two planes perpendicular to each other and respectively parallel and perpendicular to the axis of the rotary shaft.

With reference to the figures, there is shown an apparatus for shredding and mixing fibrous products according to the present invention. The apparatus comprises at least one tank or vat 12 in which there is mounted a device 10 for shredding and mixing fibrous products, such as for example hay, straw, cereals, plants of small dimensions, fruits, vegetables, tubers, also mixed with liquids, intended for preparing animal food products, as well as peats and similar compounds.

The apparatus for shredding and mixing fibrous products could for example be of the self-propelling type, like the one illustrated in the European patent EP 1449426 B1. A similar apparatus is provided, in a per se known manner, with its own driven means capable of actuating the device 10. Alternatively, the apparatus for shredding and mixing fibrous products could be fixed, or mobile but not provided with driven means, such as for example mounted on a towable trailer. In the latter case, the actuation of the device 10 may occur following the connection to a power takeoff, such as for example that of a farming tractor.

Regardless of the shredding and mixing apparatus in which it is inserted, the device 10 consists of a rotor or auger comprising a rotary shaft 14 on which there is mounted a plurality of mixing elements 16, obtained in form of anchors or blades. The mixing elements 16 are coil wound so as to constitute a single pitch, or two pitches opposite and converging towards the central area of the rotary shaft 14. The coils may be both continuous and discontinuous i.e. interrupted, depending on the needs.

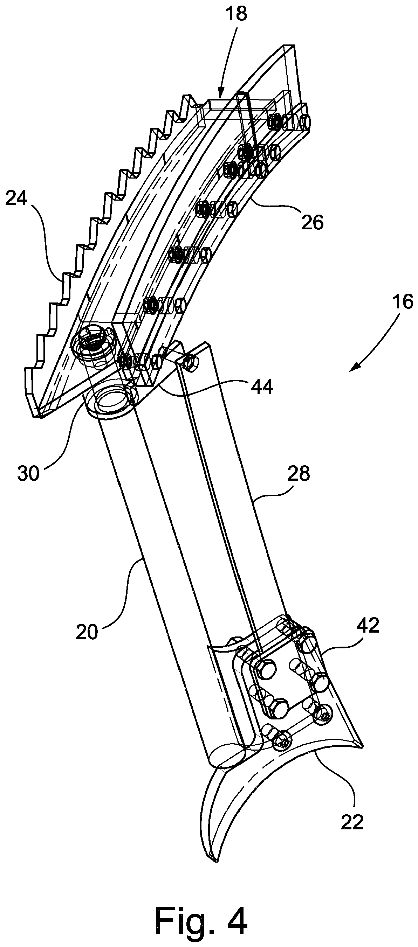

As shown in figure 4 and in the subsequent figures, each mixing element 16 consists of a scraper blade 18 operatively connected to an upper end of a supporting rod 20. The lower end of the supporting rod 20 is instead fixed on the lateral surface of the rotary shaft 14 through a respective fixing plate 22.

Each scraper blade 18 is conveniently provided with a front plate 24, preferably consisting of a shredding blade serrated at the peripheral edge thereof, and a rear plate 26, preferably consisting of an elastic sheet made of rubber reinforced with canvas. The rotation of the mixing elements 16, induced by the rotation of the shaft 14, causes the movement of the scraper blades 18 within the tank 12, so that the fibrous products present in such tank 12 may be mixed and subsequently completely evacuated thus avoiding the occurrence of harmful fermentation phenomena.

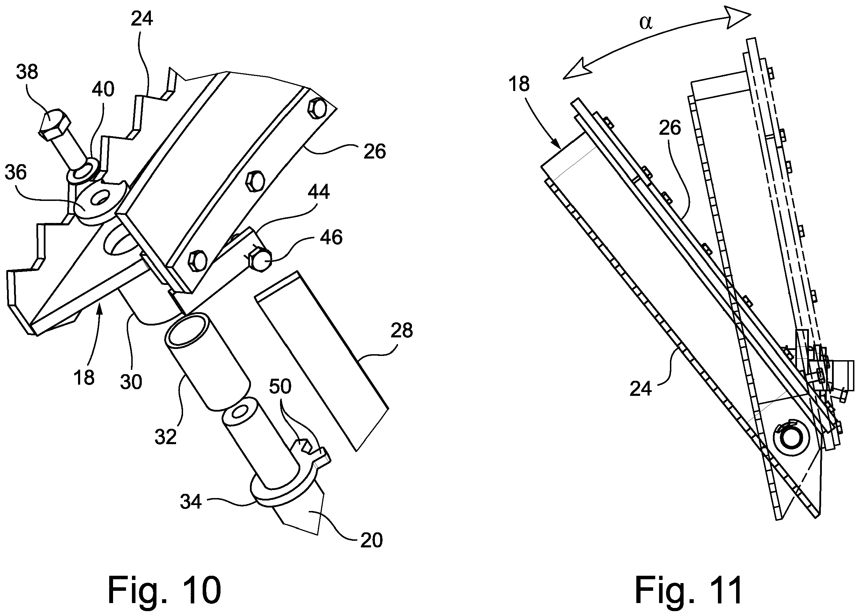

Each scraper blade 18 is rotatable around the axis of the supporting rod 20 thereof and it is provided with elastic means 28 which allow such scraper blade 18 to rotate around the relative supporting rod 20 according to a predefined angle α (figure 11) in the case where the scraper blade 18 finds an obstacle, consisting for example of masses of particularly hard fibrous product, during the rotation of the shaft 14, as well as returning such scraper blade 18 in the initial position thereof after a determined time range, coinciding with the instant in which the aforementioned obstacle has been overcome or removed. This allows to reduce the stresses and possible overloads on the rotary shaft 14 and, thus, the wear of the components of the device 10 and the relative driven actuation means.

In order to be able to rotate around the axis of the relative supporting rod 20 each scraper blade 18 is provided, at an end thereof, with a bush 30 engaged in a rotating manner on the upper end of such supporting rod 20 by interposing an antifriction sleeve 32 made of nylon. The bush 30 rests on a lower support flange 34, coupled by welding at the upper end of the supporting rod 20, and it is provided with an upper blocking flange 36, fixed through a screw 38 and a relative washer 40 on the upper end of such supporting rod 20.

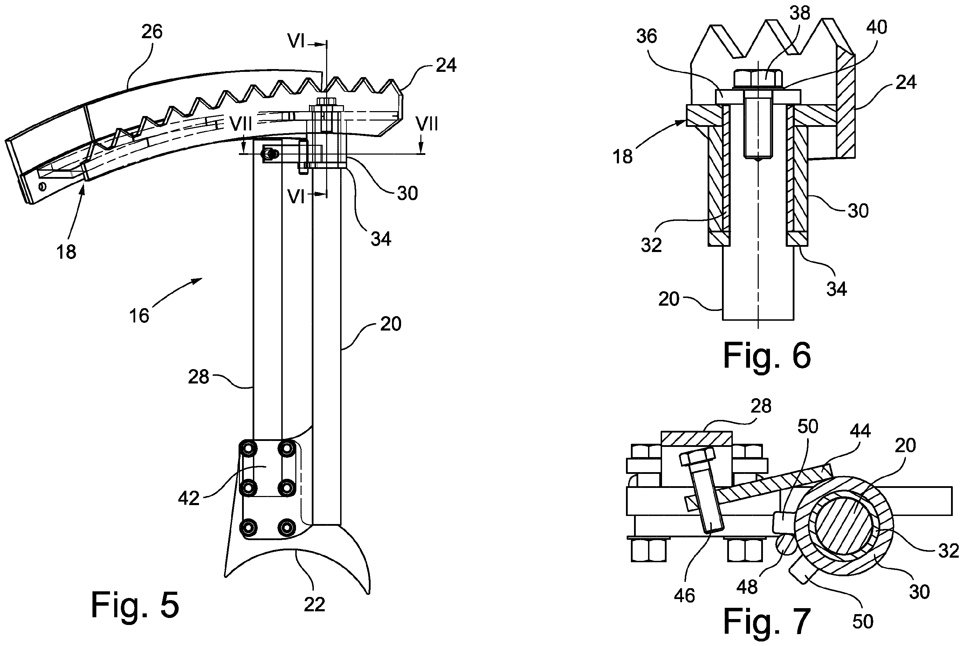

Each scraper blade 18 is provided with end stroke means which limit the rotation movement thereof so that it does not exceed the predefined angle α. In particular, as shown in figure 7, such end stroke means may comprise an end stroke pin 48 integral with the bush 30 and oriented parallel to the axis of the supporting rod 20. The lower support flange 34 of the bush 30 is thus provided with a pair of stop teeth 50, arranged radially, within which the end stroke pin 48 moves with circular motion during the relative rotation of the scraper blade 18 with respect to the supporting rod 20 so that such relative rotation does not exceed the width of the predefined angle α.

Preferably, the elastic means 28 are consists of a special steel foil with high elastic properties, constrained at the lower part to the fixing plate 22 through its blocking plate 42 and resting at the upper part of a first end of a bar 44 whose opposite end is integral with the bush 30. Thus, on the first end of the bar 44 there is rotatably inserted an adjustment screw 46 whose head constitutes the point of contact with the upper portion of the foil 28.

The rotation of the adjustment screw 46 allows to vary the value of the potential elastic energy that the foil 28 is capable of transferring on the bush 30 and, thus, on the scraper blade 18. In other words, the moving apart or the approaching of the head of the adjustment screw 46 with respect to the bar 44 respectively determines a greater or a lower flexion of the foil 28 and, thus, a greater or a lower amount of potential elastic energy that such foil 28 is capable of accumulating.

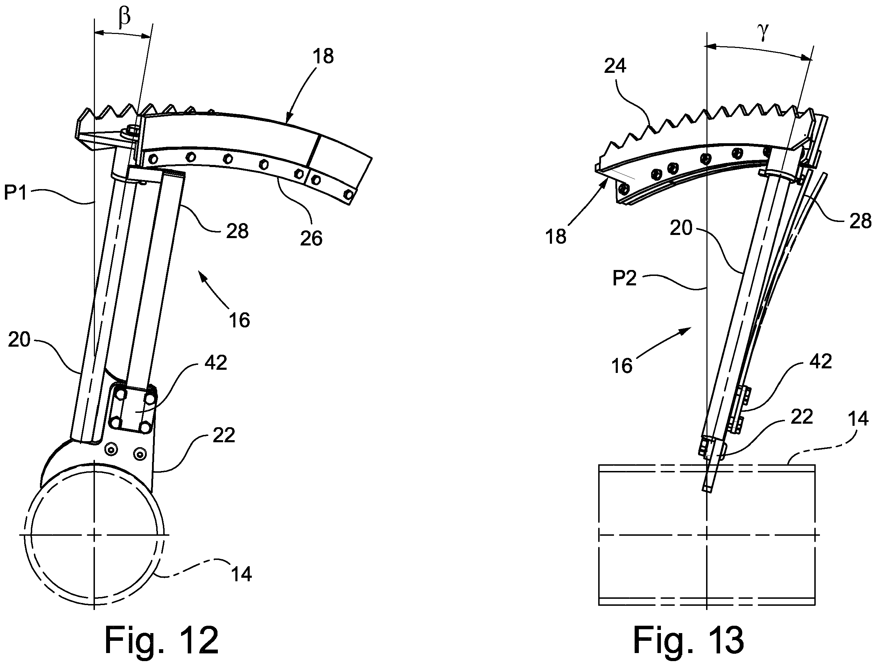

As shown in figures 12 to 15, the axis of at least part of the supporting rods 20 of the scraper blades 18 is inclined according to two distinct predefined inclination angles β and γ with respect to two corresponding planes P1 and P2 respectively parallel and perpendicular to the axis of the rotary shaft 14. The inclination angles β and γ are determined as a function of the rotation direction of the scraper blades 18 and the position of such scraper blades 18 along the rotary shaft 14. The result of such inclination angles β and γ is that each scraper blade 18, though rotating around the axis of the supporting rod 20 thereof, always describes circumferences that always maintain it equally spaced apart from the inner surface of the vat 12.

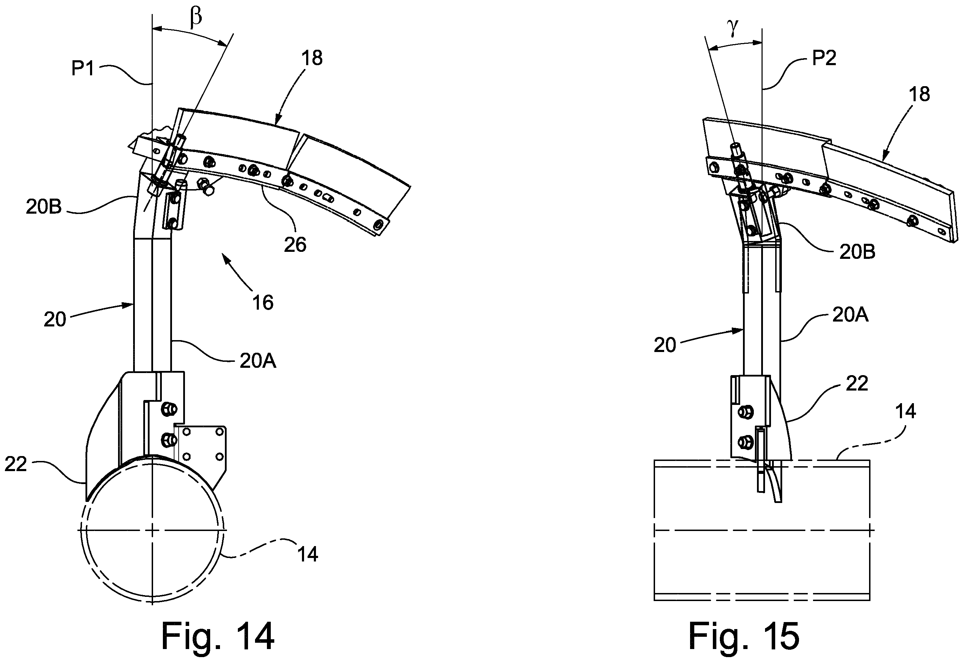

In the first embodiment of figures 12 and 13, the entire supporting rod 20 is inclined according to the inclination angles β and γ with respect to the corresponding planes P1, parallel to the axis of the rotary shaft 14, and P2, perpendicular to the axis of the rotary shaft 14. In the second embodiment of figures 14 and 15, each supporting rod 20 consists instead of a first base portion 20A, fixed on the lateral surface of the rotary shaft 14 so as to be perpendicular to such rotary shaft 14, and by a second end portion 20B, on which there is operatively connected the scraper blade 18 and which is inclined according to the inclination angles β and γ with respect to the axis of the first base portion 20A.

It has thus been observed that the apparatus for shredding and mixing fibrous products according to the present invention attains the previously outlined objects. The possibility for the scraper blades, during the rotation of the auger, to bend at least partially in the presence of possible obstacles is actually capable of reducing the stresses and possible overloads on the actuation motor and on the relative transmission members, as well as allowing an ensuing saving in terms of energy and fuel.

The mobility of the scraper blades reduces the impact thereof every time the stress requires it and the presence of the elastic means allows the immediate return thereof in the initial position at the end of the "emergency". Such scraper blades may thus continuously adapt to all stresses, small or large, as in the case of a vehicle shock absorber, thus also allowing to have an adjustable calibration (soft, medium, hard) by simply operating on the physical parameters of the elastic means. All this with a reassuring linearity of operation during the rotation and, especially, with the obvious consequence of reducing power absorption.

The apparatus for shredding and mixing fibrous products of the present invention thus conceived can in any case be subjected to numerous modifications and variants, all falling within the same inventive concept; in addition all details can be replaced by technically equivalent elements. In practice the materials used, as well as the shapes and dimensions, may vary depending on the technical requirements.

The scope of protection of the invention is thus defined by the attached claims.

## Claims

1. Apparatus for shredding and mixing fibrous products intended for preparing animal food products, of the type comprising a tank or vat (12) within which there is mounted a shredding and mixing device (10) consisting of a rotor or auger comprising a rotary shaft (14) on which there is mounted a plurality of mixing elements (16), each mixing element (16) consisting of a scraper blade (18) operatively connected to an upper end of a supporting rod (20), while the lower end of said supporting rod (20) is fixed on the lateral surface of the rotary shaft (14) through a respective fixing plate (22), wherein each scraper blade (18) is rotatable around the axis of the supporting rod (20) thereof and it is provided with elastic means (28) which allow said scraper blade (18) to rotate around the relative supporting rod (20) according to a predefined angle (α) in the case where said scraper blade (18) finds an obstacle during the rotation of the shaft (14), as well as returning said scraper blade (18) in the initial position thereof at the moment when said obstacle has been overcome or removed, the apparatus being **characterised in that** the axis of at least part of the supporting rods (20) of the scraper blades (18) is inclined according to two predefined inclination angles (β, γ) with respect to two corresponding planes (P1, P2) respectively parallel and perpendicular to the axis of the rotary shaft (14), said predefined inclination angles (β, γ) being determined as a function of the rotation direction of the scraper blades (18) and the position of said scraper blades (18) along the rotary shaft (14), said predefined inclination angles (β, γ) allowing each scraper blade (18), though rotating around the axis of the supporting rod (20) thereof, to always describe the circumferences which maintain said scraper blade (18) equally spaced apart from the inner surface of the tank or vat (12), wherein each scraper blade (18) is provided, at an end thereof, with a bush (30) engaged in a rotating manner on the upper end of the supporting rod (20) by interposing an antifriction element (32), so that said scraper blade (18) can rotate around the axis of the relative supporting rod (20), and wherein the elastic means (28) consist of a steel foil with high elastic properties, constrained at the lower part to the fixing plate (22) through its blocking plate (42) and resting at the upper part on a first end of a bar (44) whose opposite end is integral with the bush (30).

2. Apparatus according to claim 1, **characterised in that** each supporting rod (20) consists of a first base portion (20A), fixed on the lateral surface of the rotary shaft (14) so as to be perpendicular to said rotary shaft (14), and of a second end portion (20B), on which there is operatively connected the scraper blade (18), said second end portion (20B) being inclined according to said predefined inclination angles (β, γ) with respect to the axis of the first base portion (20A).

3. Apparatus according to claim 1, **characterised in that** said antifriction element (32) consists of a nylon sleeve.

4. Apparatus according to claim 1, **characterised in that** the bush (30) rests on a lower support flange (34), coupled by welding at the upper end of the supporting rod (20), and it is provided with an upper blocking flange (36), fixed on the upper end of said supporting rod (20).

5. Apparatus according to claim 4, **characterised in that** said upper blocking flange (36) is fixed on the upper end of the supporting rod (20) through a screw (38) and a relative washer (40).

6. Apparatus according to claim 4 or 5, **characterised in that** each scraper blade (18) is provided with end stroke means which limit the rotation movement thereof so that it does not exceed the predefined angle (α).

7. Apparatus according to claim 6, **characterised in that** said end stroke means comprise an end stroke pin (48) integral with the bush (30) and oriented parallel to the axis of the supporting rod (20), thus the lower support flange (34) of said bush (30) being provided with a pair of stop teeth (50), arranged radially, within which said end stroke pin (48) moves with circular motion during the relative rotation of the scraper blade (18) with respect to the supporting rod (20) so that said relative rotation does not exceed the width of the predefined angle (α).

8. Apparatus according to claim 1, **characterised in that** on the first end of said bar (44) there is rotatably inserted an adjustment screw (46) whose head constitutes the point of contact with the upper portion of the foil (28), the rotation of said adjustment screw (46) allowing to vary the value of the potential elastic energy that said foil (28) is capable of transferring on the bush (30) and, thus, on the scraper blade (18), so that the moving apart or the approaching of the head of the adjustment screw (46) with respect to the bar (44) respectively determines a greater or a lower flexion of the foil (28) and, thus, a greater or a lower amount of potential elastic energy that said foil (28) is capable of accumulating.

9. Apparatus according to any one of claims 1 to 8, **characterised in that** the mixing elements (16) are coil wound so as to constitute a single pitch.

10. Apparatus according to any one of claims 1 to 8, **characterised in that** the mixing elements (16) are coil wound so as to constitute two pitches opposite and converging towards the central area of the rotary shaft (14).

11. Apparatus according to any one of claims 1 to 10, **characterised in that** each scraper blade (18) is provided with a front plate (24), consisting of a shredding blade serrated at the peripheral edge thereof, and a rear plate (26), consisting of an elastic sheet made of rubber reinforced with canvas.

## Patentansprüche

1. Vorrichtung zum Zerreißen und Mischen von Faserprodukten, die zur Herstellung von Tierfutterprodukten bestimmt sind, des Typs umfassend einen Behälter oder Kessel (12), in dem eine Zerreiß- und Mischvorrichtung (10) eingebaut ist, bestehend aus einem Rotor oder einer Schnecke, umfassend eine Drehwelle (14), auf der mehrere Mischorgane (16) eingebaut sind, wobei jedes Mischorgan (16) aus einer Schaberklinge (18) besteht, die an einem oberen Ende einer Stützstange (20) wirkverbunden ist, während das untere Ende der Stützstange (20) an der Seitenfläche der Drehwelle (14) durch eine jeweilige Befestigungsplatte (22) befestigt ist, wobei jede Schaberklinge (18) um die Achse ihrer Stützstange (20) drehbar ist und mit elastischen Mitteln (28) versehen ist, die es der Schaberklinge (18) erlauben, sich um die jeweilige Stützstange (20) entsprechend einem vordefinierten Winkel (α) zu drehen, falls die Schaberklinge (18) während der Drehung der Welle (14) auf ein Hindernis stößt, oder aber die Schaberklinge (18) in ihre Anfangsstellung zurückzubringen, wenn das Hindernis überwunden oder entfernt wurde, wobei die Vorrichtung **dadurch gekennzeichnet ist, dass** die Achse von wenigstens einem Teil der Stützstangen (20) der Schaberklingen (18) in zwei vordefinierte Neigungswinkel (β, γ) in Bezug auf zwei entsprechende Ebenen (P1, P2) jeweils parallel und senkrecht zur Achse der Drehwelle (14) geneigt ist, wobei die vordefinierten Neigungswinkel (β, γ) in Abhängigkeit von der Drehrichtung der Schaberklingen (18) und der Stellung der Schaberklingen (18) längs der Drehwelle (14) festgelegt werden, wobei die vordefinierten Neigungswinkel (β, γ) es jeder Schaberklinge (18) durch Drehung um die Achse ihrer Stützstange (20) erlauben, die Umfänge zu beschreiben, die die Schaberklinge (18) gleichmäßig von der Innenfläche des Behälters oder Kessels (12) beabstandet halten, wobei jede Schaberklinge (18) an einem ihrer Enden mit einer Buchse (30) versehen ist, die auf drehbare Weise am oberen Ende der Stützstange (20) unter Einfügen eines reibungsmindernden Elements (32) in Eingriff gebracht wird, so dass die Schaberklinge (18) sich um die Achse der jeweiligen Stützstange (20) drehen kann, und wobei die elastischen Mittel (28) aus einer Stahlfolie mit hohen elastischen Eigenschaften bestehen, die am unteren Teil mit der Befestigungsplatte (22) durch ihre Blockierplatte (42) verbunden ist und am oberen Teil auf einem ersten Ende einer Stange (44) aufliegt, deren gegenüberliegendes Ende einstückig mit der Buchse (30) ausgeführt ist.

2. Vorrichtung nach Anspruch 1, **dadurch gekennzeichnet, dass** jede Stützstange (20) aus einem ersten Basisabschnitt (20A) besteht, der auf der Seitenfläche der Drehwelle (14) befestigt ist, derart, dass er senkrecht zur Drehwelle (14) steht, und aus einem zweiten Endabschnitt (20B), mit dem die Schaberklinge (18) wirkverbunden ist, wobei der zweite Endabschnitt (20B) entsprechend den vordefinierten Neigungswinkeln (β, γ) in Bezug auf die Achse des ersten Basisabschnitts (20A) geneigt ist.

3. Vorrichtung nach Anspruch 1, **dadurch gekennzeichnet, dass** das reibungsmindernde Element (32) aus einer Nylonhülse besteht.

4. Vorrichtung nach Anspruch 1, **dadurch gekennzeichnet, dass** die Buchse (30) auf einem unteren Stützflansch (34) aufliegt, der durch Schweißen am oberen Ende der Stützstange (20) gekoppelt und mit einem oberen Blockierflansch (36) versehen ist, der am oberen Ende der Stützstange (20) befestigt ist.

5. Vorrichtung nach Anspruch 4, **dadurch gekennzeichnet, dass** der obere Blockierflansch (36) am oberen Ende der Stützstange (20) durch eine Schraube (38) und eine entsprechende Unterlegscheibe (40) befestigt ist.

6. Vorrichtung nach Anspruch 4 oder 5, **dadurch gekennzeichnet, dass** jede Schaberklinge (18) mit Endlagenmitteln versehen ist, die ihre Drehbewegung begrenzen, damit sie den vordefinierten Winkel (α) nicht überschreitet.

7. Vorrichtung nach Anspruch 6, **dadurch gekennzeichnet, dass** die Endlagenmittel einen Endlagenstift (48) umfassen, der einstückig mit der Buchse (30) ausgeführt und parallel zur Achse der Stützstange (20) ausgerichtet ist, wodurch der untere Stützflansch (34) der Buchse (30) mit einem Paar von radial angeordneten Sperrzähnen (50) versehen ist, innerhalb derer der Endlagenstift (48) sich mit kreisförmiger Bewegung während der relativen Drehung der Schaberklinge (18) in Bezug auf die Stützstange (20) bewegt, so dass die relative Drehung die Weite des vordefinierten Winkels (α) nicht überschreitet.

8. Vorrichtung nach Anspruch 1, **dadurch gekennzeichnet, dass** am ersten Ende der Stange (44) eine Einstellschraube (46) drehbar eingesetzt ist, deren Kopf den Kontaktpunkt mit dem oberen Abschnitt der Folie (28) bildet, wobei die Drehung der Einstellschraube (46) eine Änderung des Wertes der potentiellen elastischen Energie erlaubt, welche die Folie (28) auf die Buchse (30) und demzufolge auf die Schaberklinge (18) zu übertragen vermag, so dass das Auseinanderbewegen oder das Annähern des Kopfes der Einstellschraube (46) in Bezug auf die Stange (44) jeweils eine größere oder eine kleinere Biegung der Folie (28) und demzufolge eine größere oder eine kleinere potentielle elastische Energie bewirkt, welche die Folie (28) zu speichern vermag.

9. Vorrichtung nach einem der Ansprüche 1 bis 8, **dadurch gekennzeichnet, dass** die Mischorgane (16) spulenförmig gewickelt sind, um eine einzige Neigung zu bilden.

10. Vorrichtung nach einem der Ansprüche 1 bis 8, **dadurch gekennzeichnet, dass** die Mischorgane (16) spulenförmig gewickelt sind, um zwei gegenüberliegende und zum mittleren Bereich der Drehwelle (14) hin konvergierende Neigungen zu bilden.

11. Vorrichtung nach einem der Ansprüche 1 bis 10, **dadurch gekennzeichnet, dass** jede Schaberklinge (18) mit einer Frontplatte (24) versehen ist, die aus einer am umlaufenden Rand gezackten Zerkleinerungsklinge besteht, und mit einer Rückenplatte (26), die aus einer elastischen Schicht besteht, die aus gewebeverstärktem Gummi hergestellt ist.

## Revendications

1. Appareil pour le broyage et le mélange de produits fibreux destinés à la préparation de produits alimentaires pour animaux, du type comprenant un réservoir ou une cuve (12) dans lequel est monté un dispositif de broyage et de mélange (10) comprenant un rotor ou vis comprenant un arbre tournant (14) sur lequel est montée une pluralité d'éléments mélangeurs (16), chaque élément mélangeur (16) comprenant une lame de raclage (18) connectée fonctionnellement à une extrémité supérieure d'une tige de support (20), alors que l'extrémité inférieure de ladite tige de support (20) est fixée sur la surface latérale de l'arbre tournant (14) par l'intermédiaire d'une plaque de fixation respective (22), dans lequel chaque lame de raclage (18) est rotative autour de l'axe de la tige de support (20) de celle-ci et elle est munie de moyens élastiques (28) qui permettent à ladite lame de raclage (18) de tourner autour de la tige de support (20) correspondante selon un angle prédéfini (α) dans le cas où ladite lame de raclage (18) trouve un obstacle durant la rotation de l'arbre (14), ainsi que de ramener ladite lame de raclage (18) dans sa position initiale au moment où ledit obstacle a été surmonté ou supprimé, l'appareil étant **caractérisé en ce que** l'axe d'au moins une partie des tiges de support (20) des lames de raclage (18) est incliné selon deux angles d'inclinaison prédéfinis (β, γ) par rapport à deux plans correspondants (P1, P2) respectivement parallèle et perpendiculaire à l'axe de l'arbre tournant (14), lesdits angles d'inclinaison prédéfinis (β, γ) étant déterminés en fonction de la direction de rotation des lames de raclage (18) et de la position desdites lames de raclage (18) le long de l'arbre tournant (14), lesdits angles d'inclinaison prédéfinis (β, γ) permettant à chaque lame de raclage (18), bien que tournant autour de l'axe de la tige de support (20) de celle-ci, de décrire toujours les circonférences qui maintiennent ladite lame de raclage (18) également écartée de la surface intérieure du réservoir ou de la cuve (12), dans lequel chaque lame de raclage (18) est munie, à une extrémité de celle-ci, d'une brosse (30) engagée d'une manière rotative sur l'extrémité supérieure de la tige de support (20) par interposition d'un élément antifriction (32), de manière que ladite lame de raclage (18) puisse tourner autour de l'axe de la tige de support (20) correspondante, et dans lequel les moyens élastiques (28) comprennent une feuille d'acier avec des propriétés élastiques élevées, bloquée au niveau de la partie inférieure sur la plaque de fixation (22) par l'intermédiaire de sa plaque de blocage (42) et s'appuyant au niveau de la partie supérieure sur une première extrémité d'une barre (44) dont l'extrémité opposée est solidaire de la brosse (30).

2. Appareil selon la revendication 1, **caractérisé en ce que** chaque tige de support (20) comprend une première portion de base (20A), fixée sur la surface latérale de l'arbre tournant (14) de manière à être perpendiculaire audit arbre tournant (14), et une deuxième portion d'extrémité (20B), sur laquelle est connectée fonctionnellement la lame de raclage (18), ladite deuxième portion d'extrémité (20B) étant inclinée suivant lesdits angles d'inclinaison prédéfinis (β, γ) par rapport à l'axe de la première portion de base (20A).

3. Appareil selon la revendication 1, **caractérisé en ce que** ledit élément antifriction (32) comprend un manchon en nylon.

4. Appareil selon la revendication 1, **caractérisé en ce que** la brosse (30) repose sur une bride de support inférieure (34), couplée par soudage à l'extrémité supérieure de la tige de support (20), et elle est munie d'une bride de blocage supérieure (36), fixée sur l'extrémité supérieure de ladite tige de support (20).

5. Appareil selon la revendication 4, **caractérisé en ce que** ladite bride de blocage supérieure (36) est fixée sur l'extrémité supérieure de la tige de support (20) au moyen d'une vis (38) et d'une rondelle correspondante (40).

6. Appareil selon la revendication 4 ou 5, **caractérisé en ce que** chaque lame de raclage (18) est munie de moyens de fin de course qui limitent le mouvement de rotation de celle-ci de manière qu'il ne dépasse pas l'angle prédéfini (α).

7. Appareil selon la revendication 6, **caractérisé en ce que** lesdits moyens de fin de course comprennent une goupille de fin de course (48) solidaire de la brosse (30) et orientée parallèlement à l'axe de la tige de support (20), la bride de support inférieure (34) de ladite brosse (30) étant ainsi munie d'une paire de dents d'arrêt (50), agencées radialement, dans laquelle ladite goupille de fin de course (48) se déplace avec un mouvement circulaire durant la rotation relative de la lame de raclage (18) par rapport à la tige de support (20) de manière que ladite rotation relative ne dépasse pas la largeur de l'angle prédéfini (α).

8. Appareil selon la revendication 1, **caractérisé en ce que** sur la première extrémité de ladite barre (44) est insérée de manière rotative une vis de réglage (46) dont la tête constitue le point de contact avec la portion supérieure de la feuille (28), la rotation de ladite vis de réglage (46) permettant de faire varier la valeur de l'énergie élastique potentielle que ladite feuille (28) est capable de transférer sur la brosse (30) et, ainsi, sur la lame de raclage (18), de manière que l'éloignement ou le rapprochement de la tête de la vis de réglage (46) par rapport à la barre (44) entraîne respectivement une flexion supérieure ou inférieure de la feuille (28) et, ainsi, une quantité supérieure ou inférieure d'énergie élastique potentielle que ladite feuille (28) est capable d'accumuler.

9. Appareil selon l'une quelconque des revendications 1 à 8, **caractérisé en ce que** les éléments mélangeurs (16) sont enroulés en bobine de manière à constituer un unique pas.

10. Appareil selon l'une quelconque des revendications 1 à 8, **caractérisé en ce que** les éléments mélangeurs (16) sont enroulés en bobine de manière à constituer deux pas opposés et convergents vers la zone centrale de l'arbre tournant (14).

11. Appareil selon l'une quelconque des revendications 1 à 10, **caractérisé en ce que** chaque lame de raclage (18) est munie d'une plaque avant (24), comprenant une lame de broyage dentelée au niveau d'un bord périphérique de celle-ci, et d'une plaque arrière (26), comprenant une feuille élastique composée de caoutchouc renforcé avec une toile.
